# EUROPEAN PATENT APPLICATION

(11) **EP 4 089 633 A1**
(43) Date of publication of application: **16.11.2022**
(21) Application number: 22172662.3
(22) Date of filing: 10.05.2022
(51) Int. Cl.: G06T 7/00, G06T 7/571

(54) **SURFACE SCANNING SYSTEM**

(30) Priority: 10.05.2021 GB 202106655
(71) Applicant: Troika Systems Limited, Highworth, Swindon Wiltshire SN6 7NS (GB)
(72) Inventor: NAYLOR,, Bruce Anthony, Swindon, SN6 7NS (GB)
(74) Representative: Adamson Jones

(57) **Abstract**

The present invention relates to a surface inspection microscopy system comprising an imaging system having an imaging sensor arranged to capture an image of an inspected surface and a lens for focusing the imaging sensor on the surface. A positioning system for adjusting a height dimension of the imaging system relative to the surface is provided. The system comprises a controller arranged to receive a plurality of digital images of the inspected surface for different height increments, the controller arranged to process received digital images by identifying one or more parameter for pixels within the image and assigning a modified height dimension value to said pixels that differs from the height dimension increment of the other pixels in the image.

## Description

### Introduction

This invention concerns surface scanning systems and, more specifically, three-dimensional surface scanning systems for surface inspection microscopy.

Surface scanning equipment is used to assess the surface quality or profile of a body using non-contact imaging at an accuracy greater than can be achieved using the human eye and may be referred to as surface inspection microscopy. Surface features on a length scale of microns, or even less than a micron, may need to be identified. Such detailed understanding of a surface is required in certain precision engineering applications, including, but not limited to, the inspection of surfaces for printing or coating systems.

Rolls used in such processes are required to have specific surface profiles that allow a medium to be carried by the surface of the roll and deposited on a substrate. The surface of such rolls may comprise a pattern of open cells arranged to carry the required volume of liquid medium. Inaccuracies in the surface geometry or degradation of the surface through use can affect operation significantly. As such, surface inspection microscopy is used to assess the surface quality/geometry in order to generate a model of the surface that can be used to calculate associated geometric or functional parameters of the surface.

Such inspection processes can be used, for example, to determine whether or not a surface is suitable for its intended use. The inspection equipment typically needs to be portable so that it can be used to inspect different rolls. It is thus normal that inspection equipment of this type is handheld.

The inspection process uses imaging of the surface and subsequent processing of the images to determine a three-dimensional profile of the surface. Two-dimensional images are taken from different heights above the surface and then analysed to provide a 'plan' of the surface for each given height. The different plans can then be stacked to form a three-dimensional profile for the surface.

One key problem with conventional surface inspection microscopy systems is that the positioning of the imaging system, i.e. the imaging sensor and/or associated lens, must be very tightly controlled to obtain accurate results. Recent technical focus has thus centred on developing greater accuracy in the mechanical drive/positioning system to facilitate greater accuracy and consistency in scanning/imaging the surface. Indeed, significant advances have been made in magnetic, capacitive and optical encoders that allow greater accuracy of mechanical positioning and adjustment. As such the skilled person would routinely attempt to address the accuracy of measurements by refining the mechanical positioning system. This typically increases the cost and/or complexity of the inspection system.

However the inventor has found that the accuracy of mechanical positioning systems may not always result in improved surface inspection accuracy. For example, the level of accuracy achievable is so high that small external factors can have a significant impact on the results even if the tolerance in the mechanical positioning system was reduced further. For example, vibrations caused by operating machinery, vehicles or people in the vicinity of the inspection equipment can cause different readings. Whilst vibration identification and cancellation techniques do exist, they are not perfectly accurate.

Consistency of readings is very important since any changes between the readings of the same surface region or between different surface regions can lead to errors in surface topology and thus very different findings about the geometric or functional characteristics of the surface.

A prior art system is shown in EP3396306. The document shows a scanning type interferometer configured to calculate a height map by scanning of the surface of workpiece. The scan of each image layer is assigned a height position determined by the height sensors. The height map is generated by interpolating data in the layers. The system then ensures each layer is equidistant by modifying the data in single image layer according to the interpolated data. However, the system adjusts the position of image layers in a wholesale fashion (i.e. every pixel in the layer is modified simultaneously). The inventor has found system is therefore unable to adjust pixel values within given image layers. The system therefore cannot rectify errors caused during the capture of single image layer.

It is an aim of the invention to mitigate one or more of the above problems. It may be considered an additional or alternative aim to improve the consistency of results achievable by a surface inspection microscopy system.

### Statements of Invention

The invention derives from taking a different approach to the accuracy of surface inspection microscopy. The revised approach proposed herein derives from an acceptance that the refinement of mechanical positioning systems will not achieve the 100% accuracy that is generally sought. Instead the present invention derives from the acceptance of at least some error in the positioning of the surface images that are captured during inspection. The invention proposes a way to handle positioning tolerances/errors in order to improve accuracy, rather than trying to eradicate them altogether from the mechanical system.

According to a first aspect of the present invention, there is provided a surface inspection microscopy system comprising: an imaging system having an imaging sensor arranged to capture an image of an inspected surface and a lens for focusing the imaging sensor on the surface; a positioning system for adjusting a height dimension of the imaging system relative to the surface; a controller arranged to receive a plurality of digital images of the inspected surface for different height increments and to assign each image to a depth dimension increment for the surface, the controller arranged to process received digital images by identifying one or more parameter for the pixels within the image and assigning a modified depth dimension value to said pixels that differs from the depth dimension increment of the image.

According to a second aspect of the invention, there is provided a surface inspection microscopy method comprising: providing an imaging system having a lens and imaging sensor; positioning the imaging system to take a plurality of images for different incremental depth dimensions of an inspected surface; and processing the images by identifying one or more parameter of the pixels within each image and assigning a modified depth dimension value to said pixels that differs from the depth dimension increment of the image.

According to a third aspect of the invention, there is provided a controller for a surface inspection microscopy system, the controller comprising machine readable instructions for controlling the operation of a surface inspection microscopy system or method according to the first or second aspects of the invention.

According to a further aspect, there is provided a data carrier comprising machine readable instructions for the control of a surface inspection microscopy system according to the first aspect or the controller of the third aspect.

According to a further aspect of the invention, there is provided a surface inspection microscopy system comprising: an imaging system having an imaging sensor arranged to capture an image of an inspected surface and a lens for focusing the imaging sensor on the surface; a positioning system for adjusting a height dimension of the imaging system relative to the surface; a controller arranged to receive a plurality of digital images of the inspected surface for different height increments and to assign each image to a depth dimension increment for the surface, the controller arranged to process received digital images by identifying one or more parameter for a portion of the pixels within the image and assigning a modified depth dimension value to said portion of pixels that differs from the depth dimension increment of the other pixels in the image.

According to a further aspect of the invention, there is provided a surface inspection microscopy method comprising: providing an imaging system having a lens and imaging sensor; positioning the imaging system to take a plurality of images for different incremental depth dimensions of an inspected surface; and processing the images by identifying one or more parameter for a portion of the pixels within each image and assigning a modified depth dimension value to said portion of pixels that differs from the depth dimension increment of the other pixels in the image.

The controller may identify one or more parameter for a portion of the pixels within the image, and assigns a modified height dimension value to said portion of pixels that differ from the height dimension increment of the other pixels in the image

The modified depth dimension value may comprise an offset from the depth dimension increment. The modified depth dimension value may comprise a value intermediate/between two of the depth dimension increments. The modified depth dimension value could comprise a different depth dimension increment. The intermediate height increments may be evenly spaced between the height increments.

The controller may interpolate between the depth dimension increments.

One or more further/intermediate depth dimension increment may be defined, inserted or applied (e.g. by the controller) between the depth dimension increments of the received images. The modified depth dimension value may be assigned to said pixels by assigning an intermediate depth increment to said pixels.

The depth value of the intermediate depth dimension increment may be predetermined relative to the depth dimension increment(s) of the image(s). The depth value of the depth dimension increment may be a predetermined offset from one or more depth dimension increment, e.g. lying a fraction of the distance between adjacent images or their respective depth dimension increments.

A predetermined number of intermediate depth dimension increments may or may not be inserted between the depth dimension increments. A plurality of intermediate depth dimension increments may be inserted

The controller may log the images including the pixels and their depth dimension values, e.g. including the modified/assigned depth dimension values.

The images and associated depth dimension values of the pixels may be used to construct a surface model, e.g. three-dimensional surface model, of the inspected surface. The model may be a geometric model. The model may include the surface position at different depths. The model may be used to generate a further geometric property of the surface. The determined geometric property may comprise a surface depth, surface area and/or volumetric surface measurement, such as a void volume for the surface.

The captured images may be two dimensional images. The captured images may comprise an array of pixels, i.e. digital images.

The one or more parameter value for said pixels may be compared with one or more comparative parameter value. A determination of whether or not to assign a modified depth dimension value for one or more pixel may be performed based on said comparison. A magnitude of adjustment/modification of the modified depth dimension value may be performed based on said comparison.

The comparison may comprise comparing the one or more parameter value for pixels with the parameter value one or more adjacent/neighbouring pixels. The adjacent pixel(s) may be in the same image or the adjacent image, e.g. the adjacent depth increment image.

The one or more parameter may comprise intensity/brightness and/or colour/hue.

The controller may compare an angle subtended between the pixel and one or more neighbouring pixel in a different image with a threshold angle.

The captured images may be two-dimensional digital images.

The processing of the images may comprise a filtering step. The filtering step may comprise removing/discarding pixels from the captured images. This may be performed prior to the assigning of modified depth dimension values to the pixels. Only the remaining pixels after the filtering step may be processed for depth dimension value assessment/adjustment.

The filtering step may comprise identifying one or more parameter value for pixels of an image. The filtering step may comprise comparing the parameter values for the pixels to one or more threshold or datum criterion and discarding pixels that depart from the threshold or datum criterion, e.g. by meeting or exceeding the threshold criterion.

The adjustment of the height dimension of the imaging system may comprise adjusting the height of the imaging sensor and/or lens relative to the surface.

The system may comprise a handheld or portable inspection device.

The controller may log the images including the pixels and the modified height dimension values for said pixels. The logs of the images may include the pixels and the modified height dimension values for said pixels are comprised in a three-dimensional surface model. The model may comprises one or more geometric property of the surface determined from the height values, including a surface depth, surface area and/or volumetric surface measurement.

Any optional feature defined herein in relation to any one aspect of the invention may be applied to any further aspect of the invention wherever practicable.

### Detailed Description

Workable embodiments of the invention are described in further detail below with reference to the accompanying drawings, of which:
Fig. 1 shows a schematic view of a system according to an example of the invention;
Fig. 2 shows an overview of method steps performed for surface inspection microscopy, e.g. using the system of Fig. 1;
Fig. 3 shows a schematic example of a pixel array and associated intermediate depth dimension values according to an example of the invention; and
Fig. 4 shows an example of surface inspection microscopy results.

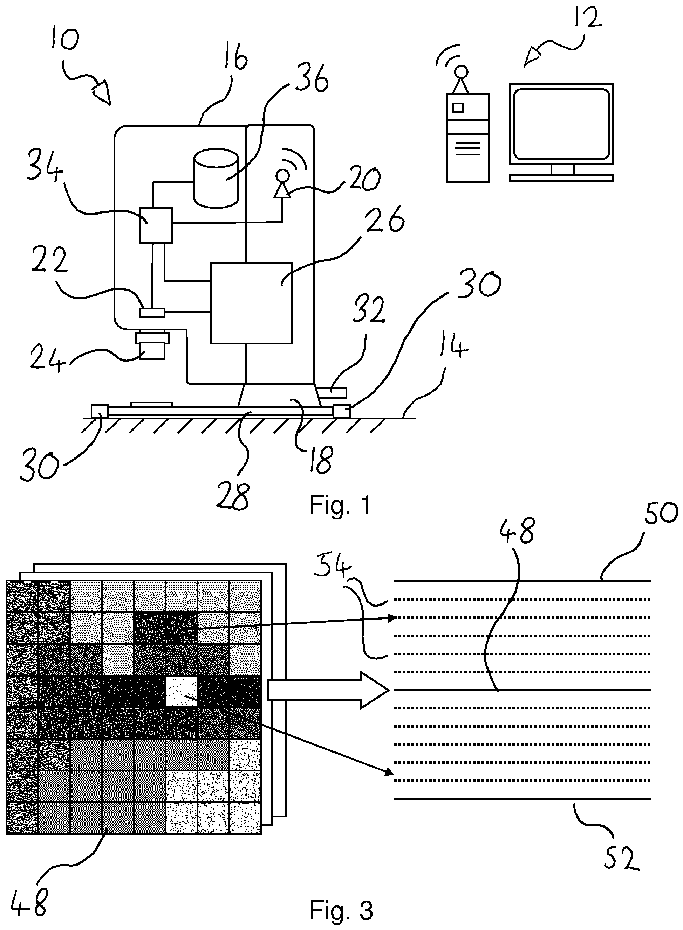

Turning firstly to figure 1 there is shown a surface inspection microscopy system taking the form of a device 10, which may in some examples communicate with one or more computer 12. The computer 12 and device 10 may be connected by wires or wirelessly. The computer 12 may be connected to the device 10 via a local or wide area network and, as such, the computer 12 may be located locally or remotely of the device 10.

The computer allows for data processing and/or visualisation of the surface inspection data generated by the device, e.g. for modelling of the inspected surface. In various embodiments of the invention, the computer 12 could be on-board the device 10 or separate from the device 10. As such any references to a controller for processing surface inspection data used herein could refer to a controller on-board the device 10 or a separate/remote data processor of the system.

The device 10 is shown schematically in Fig. 1 in an in-use condition atop a surface 14 being inspected. The device comprises a housing 16 and a support structure 18 for location of the device 10 against the surface 14 under inspection. The housing 16 comprises the electronic components of the device for controlling image capture, processing and logging, e.g. including transmitter/transceiver circuitry 20 for communicating the resulting data off the device.

The device 10 comprises an image capture sensor 22, e.g. a camera, and associated lens 24 for focussing incident light onto the image capture sensor. The lens 24 may comprise a lens module/system having height adjustment means for adjusting the spacing of the lens 24 relative to the image capture sensor 22 and/or surface 14. Such height adjustment means are conventional and will not be described in detail for brevity.

The lens 24 may comprise a plurality of lenses for reorienting, magnifying and/or focussing the light passing therethrough onto the image capture sensor. Magnifying lenses in the order of x4, x10 and x20 could be used.

The image capture sensor comprises a CMOS camera in this example suitable for capturing a digital image at a desired resolution, although other digital cameras could be used. The image capture sensor may comprise a sensor array arranged to capture a digital image as a pixel array, each pixel having associated corresponding intensity (brightness) and hue (colour) values. 16-bit pixel data could be used.

The image capture sensor may have a resolution of greater than 200x200. Ideally the resolution is greater than 400 in the X and/or Y direction. A 640x480 pixel resolution is used in this example although a higher resolution could be used.

A digital zoom could be used in addition to an optical zoom mechanism.

The device 10 may comprise, e.g. in addition to the lens height adjustment means, a height adjustment mechanism 26 for the device. The height adjustment mechanism may adjust the height of the housing and associated components relative to the support structure 18.

Any of the height adjustment means used may be conventional, e.g. comprising a motor or other actuator, a driver for controlling adjustment by the motor/actuator and an encoder for determining position. The height adjustment means may adjust the height of the image contact sensor and/or housing 16 as a whole relative to the support structure 18.

The device may be powered by an on-board power supply, such as a battery, or by connection to an external power supply.

The support structure 18 in this example comprises a pair of rails or rods 28 having feet 30, e.g. spaced along the rails or at opposing ends thereof, for contacting the surface 14. This allows location of the device 10 on the surface 14 in the vicinity of a surface region to be inspected. The device can thus stand or rest against the surface.

The support structure 18 in this example comprises lateral adjustment means, i.e. for adjusting the position of the housing and image capture sensor 22 along the rails 28. The lateral adjustment mechanism may comprise a rotary actuator 32, e.g. such that a rotary input is converted to a linear output in a manner similar to a micrometer screw gauge or similar. An alternative/powered actuator could be used for lateral adjustment if desired.

The support structure may comprise an inspection window, i.e. beneath the image capture senor/camera. The inspection window may comprise a lens.

Imaging is typically performed top down onto an opaque surface to be inspected.

The device 10 comprises one or more light source, typically a plurality of light sources. One or more light source may be provided at the inspection window. Co-axial and/or radial light sources may be used. In this example a single co-axial and two radial light sources are used although other combinations or a plurality of single-type light sources could be accommodated. The light source(s) are under the control of a device controller. The combination of radial and axial light sources may help minimize shadows on the surface.

The device 10 comprises a controller 34 and data store 36. The controller may comprise one or more processors comprising machine readable instructions for receiving and processing image data form the image capture sensor 22. Data processing will be described further below. The received and/or processed image data can be saved by the controller 34 in the data store 36. Additionally or alternatively such data may be transmitted to a remote computer 12 via the transmitter 20. The data may be saved locally or remotely. The processing steps may be performed locally or remotely or using a combination of on-board and remote processing, e.g. whereby initial image processing is performed by controller 34 but subsequent detailed modelling and graphical representation is performed remotely.

The data store 36 is typically a non-volatile data store, i.e. in addition to the operational memory of the controller 22. A conventional hard disc or solid state memory device may be used. A removable memory device, e.g. a memory stick or card, could be used.

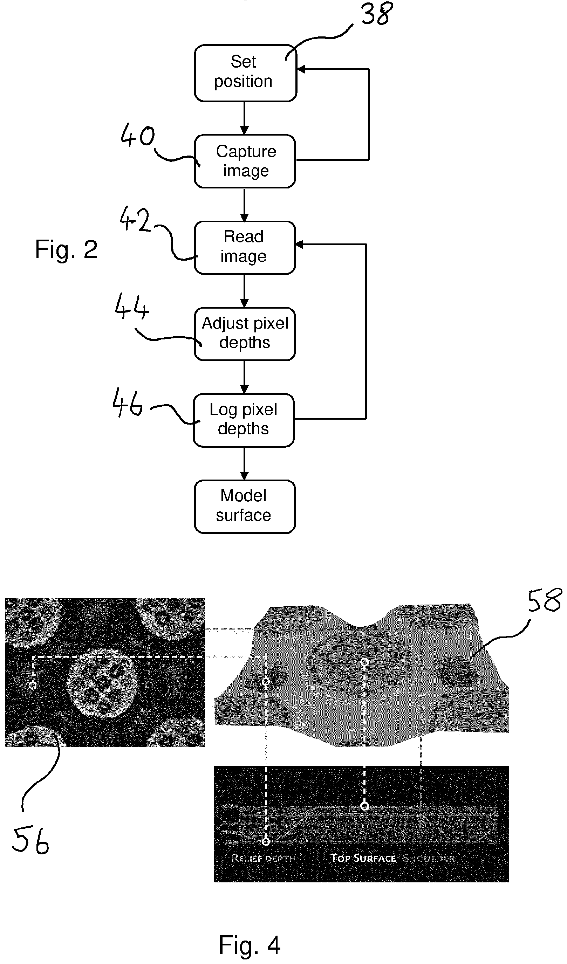

Turning now to Fig. 2, there is shown an overview of the process for capturing and processing images of the surface to be inspected. The device 10 is first moved to a desired location and positioned relative to the surface to be inspected.

At step 38, height adjustment is performed for the image capture sensor 22 and/or lens 24 so as to focus the image capture sensor at a desired depth relative to the surface an image is then taken at step 40 and logged for the given height setting. The method may initiate by taking an image at a datum position from which other relative height/depth positions can be determined.

The image capture process may iterate as many times as required by adjusting the height incrementally and taking a further image at the new height/depth increment. Each time an image is taken, it may be logged with its height/depth increment.

Each image may be considered to define a layer or plane for the surface.

The height adjustment increments may comprise micro-adjustment, e.g. each height/depth increment being in the order of units of microns or a single micron. Typically the adjustment increment may be less than one micron, e.g. in the order of 0.5 µm or less, such as 0.4 µm, 0.3 µm, 0.2 µm or 0.1 µm. At such small increments, the accuracy of the mechanical adjustment system becomes an issue.

Although the image capture loop 38, 40 is shown in Fig.2 ahead of the pixel processing loop 42, 44, 46, each image could be processed according to steps 42, 44, 46 before capturing the next image or else, image processing could be carried out in parallel with subsequent image capture.

At step 42, the controller 34 reads the capture image data comprising the pixel locations and the intensity and hue data for each image. The controller 34 then processes the pixel data in order to alter the received data in manner than may improve the accuracy of any three-dimensional computational/geometric model generated for the surface. As such, any aspect of the invention may be referred to as a method/system for three-dimensional surface scanning.

A schematic example of a small pixel array 48 is shown in Fig. 3. The image capture process results in capture of a plurality of such pixel array data for a corresponding plurality of depth dimensions.

A first pixel filtering step may be carried out, e.g. an image clean-up step. The controller 34 may assess the received pixel data for the array of pixels and may identify any pixels deemed to be erroneous or outliers. The controller may then discard those pixels, i.e. delete them or disregard them from further processing steps.

In performing the filtering step, the processor may compare the pixel intensity and/or hue values against absolute/predetermined values and may discard pixels if one or more threshold criterion is met/exceeded. Additionally or alternatively, the controller 34 may compare the pixel values against neighbouring or adjacent pixel values and may discard pixels if a mismatch or difference between one pixel and its neighbouring pixels meets or exceeds one or more threshold criterion. For example, the controller 34 may disregard a pixel if its intensity/hue data is irreconcilable with one or a plurality of adjacent pixels in the same image or adjacent images, i.e. the next higher/lower image. The decision may be taken to discard a pixel if the mismatch in value between a pixel and its neighbouring pixels is beyond a predetermined threshold.

Once the filtering of the pixel array has been performed, there is now a remaining collection of pixels at the given depth increment with associated location, brightness and hue values. Using those remaining pixels, the controller 34 now compares the pixels to neighbouring pixels in the same image and/or adjacent images to determine whether the height/depth value for that pixel appears to be accurate.

In this regard, a pixel neighbourhood may be defined comprising all adjacent pixels in three-dimensions. For example, in a Cartesian coordinate system, the pixel may be defined as comprising four adjacent pixels in the four orthogonal directions (left, right, back, forward) in the XY plane. If diagonal directions are included, the neighbourhood could be considered to comprise eight pixels in the XY plane.

In the Z plane, the pixel may be considered to have two adjacent pixels in the Z direction (ie. directly above and below the pixel in the same XY location) in the adjacent images. If diagonal directions are included, the neighbourhood of the pixel under assessment may be considered to comprise a further four or eight pixels in the image above and/or a further four or eight pixels in the image below, i.e. the pixels adjacent to the directly above pixel and/or the directly below pixel.

Using the above considerations, a neighbourhood of the pixel under investigation could be defined as having anywhere between one or two adjacent pixel and twenty-six adjacent pixels. Various combinations of pixels for the neighbourhood are possible but the neighbourhood preferably comprises a plurality of pixels in one or more adjacent image in order to increase the certainty with which pixel height can be determined/corrected.

In further examples, the pixel may be matched to its neighbouring pixels by corresponding or similar values of hue/brightness. For example is a pixel brightness and/or hue matches most closely a further pixel that is near but not immediately adjacent the pixel under assessment, the neighbourhood may be set to include that further pixel and/or the pixels adjacent to tat pixel. In other words, the assessment may comprise a pixel matching assessment to determine pixels that are most likely to be adjacent the pixel in question, even if the location generated by the image sensor is not strictly adjacent.

The controller 34 can now compare the pixel values of hue and/or brightness with its neighbourhood and determine whether the predetermined/incremental height/depth of pixel is correct. If a difference between one or more pixel parameter value and its neighbourhood (e.g. in the Z direction) exceeds a threshold level, the controller may determine the pixel height value to be incorrect and seeks to adjust the pixel height value so that it better matches its neighbourhood.

One assessment used in height determination for the pixel may comprise assessing the 'rate' of change in brightness or hue between adjacent images, i.e. in the Z-direction. For example, the controller 34 may determine an angle formed between the pixel and one or more pixel in its neighbourhood. If the angle meets or exceeds a threshold value, the controller may determine the rate of change to be incorrect and may seek to alter the angle by altering the height of the pixel to bring it within the threshold, i.e. to produce an acceptable or 'likely' actual height for the pixel based on its identified neighbourhood.

This kind of height adjustment may be referred to as a 'smoothing' algorithm, i.e. an algorithm that finds unacceptable changes between a pixel and its neighbourhood and seeks to correct them by height adjustment of the pixel relative to its neighbourhood. This type of adjustment may be based on the understanding that smooth changes in surface profile are far more likely than sheer changes between the adjacent height/depth increments.

Turning to Fig. 3, there is shown an image being processed in the form of pixel array 48. On the right hand side of Fig. 3, the predetermined incremental height of the image 48 is shown relative to adjacent image heights 50 and 52.

The controller 34 can define one or more additional intermediate height(s) 54 at which pixels could exist, e.g. if the height increment achieved by the height adjustment mechanism is deemed inaccurate.

Based on the assessment of the pixel relative to its neighbourhood described above, the controller 34 may change the pixel height in image 48 away from its predetermined/incremental height and instead assign one of the incremental height values instead. The controller 34 may thus offset the height of the pixel away from its incremental value by one or more predetermined amount to match one of the intermediate height 54 values.

The pixel is then logged with its revised height as part of the image/array 48. This may be repeated for all pixels of the image/array 48. The revised image thus comprises the pixel parameter values and location values in three-dimensions, where the pixel location values in the Z direction do not need to match the incremental height value. The pixels heights in any one image may therefore differ.

In the example of Fig. 3, the pixel 48a has been raised in height, whereas the pixel 48b height has been reduced. The magnitude of change may differ between pixels as well as the direction of the change.

The number of intermediate heights 54 between the height increments may be set at one, two or any number of intermediate increments. The height spacing between intermediate heights 54 may be set accordingly as a fraction of the height between the recorded images. For one intermediate height 54, it would be spaced half way between the height increments. For two intermediate heights 54, each would be spaced by a third of the height increments, and so on.

Returning to Fig. 2, once the image processing steps 42, 44, 46 have been repeated for all images, the image files and associated height values for the pixels now collectively represent a three-dimensional model of the surface, e.g. when stacked.

A model of the surface may be defined by joining up the pixels determined to define the surface at the relevant heights, thereby defining a continuous surface profile comprising the relevant pixels. Although a three-dimensional model is produced in this manner, it will be appreciated that it is possible to take two-dimensional sections through such a model, e.g. in the vertical or horizontal plane if needed.

The steps described above in relation to Figs. 2 and 3 may be repeated at numerous locations on the surface 14. Inspecting different regions of the surface allows a more accurate picture to be established of the state of the surface as a whole. This may assist in identifying different rates of wear or different surface quality regions. Average values for the different locations may be determined for summarising the overall geometric or condition properties for the inspected su rface.

Various calculations for the surface can now be performed using the constructed surface model. Fore example, the surface depth can be compared to previous surface determinations to assess wear. The surface may be compared to a datum/ideal surface to determine divergence therefrom. The surface may be compared to other inspected surfaces to determine uniformity or differences therebetween.

The width, depth and/or volume of surface formations may be determined form the model. For example, the width, depth and/or volume of craters in the surface or protrusions/peaks of the surface may be determined using standard geometric calculations.

Example outputs of the model are shown in Fig. 4, whereby features in a two-dimensional image 56 can be matched to corresponding locations in a three-dimensional model 58 for the surface, which can in turn be used to generate section profiles through the surface. The width and/or height of individual features can be determined as well as any geometric or functional features derived therefrom.

The system and methods described herein may be used for inspecting surface degradation through use or as a quality control tool for inspecting new products as a result of a surface manufacturing process. Other uses could involve surface inspection for research purposes.

One particular application involves inspection of rolls used in printing or coating processes. Rolls for those purposes are manufactured to have a desired surface profile, e.g. having volumetric cells formed at the surface for carrying and depositing ink or another coating fluid in use. The structure and volume of those cells are thus critical to the printing/coating process.

The invention may allow more accurate assessment of the surface structure and/or associated operations properties. For example, the invention may allow more accurate determination of the behaviour of a fluid interface provided by the surface.

The invention may be used for assessment of flexographic, gravure and coating printer surfaces. The invention may be used by manufacturers or users of anilox, gravure and/or flexoplate machines.

The invention may be used to assess engravings, embossing, etched surfaces, machined surfaces or other applied surface texture or geometric features.

The system may identify parameters of a portion or select number of pixels in a given image. The system may therefore assign modified height dimension to the select number/portion of the pixels within the image accordingly. This allows correction of one or more pixels within a given image, thus allowing correction of errors in the scan of a given height.

Embodiments of the invention are described above in relation to surface inspection of rolls and the like for printing/coating processes. However the invention is not limited to such use and may be applied in any other surface inspection microscopy that requires the associated level of accuracy. Such applications may comprise fluid washed surfaces of other types, e.g. aerodynamic or tribological surfaces, for which surface degradation or inaccuracy on a microscopic level can affect performance. Such applications may exist in aerospace, automotive, power generation, amongst other fluid dynamics or microfluidics applications. The invention could also be used to inspect/model surface quality of engineered parts or coatings for other reasons.

## Claims

1. A surface inspection microscopy system comprising:
an imaging system having an imaging sensor arranged to capture an image of an inspected surface and a lens for focusing the imaging sensor on the surface;
a positioning system for adjusting a height dimension of the imaging system relative to the surface;
a controller arranged to receive a plurality of digital images of the inspected surface for different height increments, the controller arranged to process received digital images by identifying one or more parameter for pixels within the image and assigning a modified height dimension value to said pixels that differs from the height dimension increment of the other pixels in the image.

2. A system according to claim 1, wherein the controller identifies one or more parameter for a portion of the pixels within the image, and assigns a modified height dimension value to said portion of pixels that differ from the height dimension increment of the other pixels in the image.

3. A system according to claims 1 or 2, wherein the modified height value comprises a value between two of the height increments; preferably, where the controller interpolates between the height increments

4. A system according to any preceding claim where the controller defines a plurality of intermediate height increments between two adjacent height increments and assigns a height value of one of the intermediate height increments to said pixels

5. A system according to claim 4, where the controller defines a predetermined number of intermediate height increments between two adjacent height increments.

6. A system according to any preceding claim, where the controller logs the images including the pixels and the modified height dimension values for said pixels.

7. A system according to any preceding claim where the controller processes the digital images by comparing one or more parameter value for said pixels with one or more comparative parameter value and determines whether a modified height value should be applied for said pixels based upon said comparison.

8. The system of claim 7, where the controller compares the one or more parameter value for the pixels with a parameter value one or more adjacent/neighbouring pixels.

9. The system of claim 8, where the one or more neighbouring pixel comprises a pixel in the same image or an adjacent image.

10. The system according to any one of claims 7 to 9, where the one or more parameter comprises an brightness and/or colour parameter.

11. The system of any preceding claim, where the processing of the images comprise a filtering step in which pixels are discarded from the captured images, the modified height dimension values being applied only to remaining pixels after the filtering step.

12. A system according to any preceding claim where the controller matches the height increment or modified height dimension to a depth dimension of the surface.

13. A surface inspection microscopy method comprising:
providing an imaging system having a lens and imaging sensor;
positioning the imaging system to take a plurality of images for different incremental depth dimensions of an inspected surface; and
processing the images by identifying one or more parameter for pixels within each image and assigning a modified depth dimension value to said pixels that differs from the depth dimension increment of the image.

14. A controller for a surface inspection microscopy system, the controller comprising machine readable instructions for controlling the operation of a surface inspection microscopy system to perform the method steps of claim 13.

15. A data carrier comprising machine readable instructions for the control of a surface inspection microscopy controller according to claim 14.
